# FASCICULE DE BREVET EUROPEEN

(11) **EP 0 954 486 B1**
(45) Date de publication et mention de la délivrance du brevet: **21.03.2001**
(21) Numéro de dépôt: 98903088.7
(22) Date de dépôt: 15.01.1998
(51) Int. Cl.: B65D 51/00

(54) **BOUCHAGE POUR FLACON DE REACTIF UTILISABLE PAR UN AUTOMATE D'ANALYSE**
VERSCHLUSSVORRICHTUNG FUR EIN REAGENZGLAS VERWENDBAR IN EINEM ANALYSEAPPARAT
SEAL FOR TEST BOTTLE USABLE BY AN ANALYSING MACHINE

(30) Priorité: 24.01.1997 FR 9700916
(43) Date de publication de la demande: 10.11.1999
(73) Titulaire: DIAGNOSTICA STAGO, 92602 Asnières (FR)
(72) Inventeur: ROUSSEAU, Alain, F-75004 Paris (FR); GELIN, Jean, François, F-94000 Créteil (FR)
(74) Mandataire: de Saint-Palais, Arnaud Marie
(86) Numéro de dépôt international: FR9800094
(87) Numéro de publication internationale: WO9832672

(56) Documents cités:
- EP-A- 0 560 390
- WO-A-97/29028
- DE-B- 1 300 463
- FR-A- 1 267 855
- FR-A- 2 188 565
- GB-A- 804 824
- US-A- 5 334 178
- US-A- 5 455 180

## Description

La présente invention concerne un bouchage pour flacon de réactif utilisable par un automate d'analyse.

Elle s'applique notamment mais non exclusivement au conditionnement de réactifs prêts à l'emploi ou même de réactifs lyophilisés destinés à être reconstitués avant emploi avec un solvant et/ou un diluant tel que de l'eau distillée.

Habituellement, les flacons utilisés pour ce type d'application sont obturés au moyen d'un bouchon ou d'un opercule réalisé en une matière élastique conçue de manière à pouvoir être perforé par une aiguille d'injection et/ou d'aspiration présentant une extrémité pointue généralement taillée en biseau.

Cette aiguille est conçue de manière à se déplacer coaxialement au flacon afin de traverser le bouchon ou l'opercule puis s'engager à l'intérieur du flacon pour s'immobiliser dans une position d'aspiration dans laquelle l'orifice d'aspiration est situé à une légère distance du fond. Cette distance est déterminée de manière à éviter tout bouchage et/ou toute détérioration de l'aiguille au contact du fond.

Il est clair que seul le volume de réactif situé en dessus de l'extrémité supérieure de l'orifice de l'aiguille pourra être aspiré, le volume situé en dessous constituant un volume mort non utilisé. Il s'avère que ce volume mort, qui est fonction de la forme du fond et de l'oblicité de la pointe de l'aiguille, est relativement important.

Bien entendu, les opérateurs ont tendance à réutiliser ce volume mort en le transvasant dans un autre flacon ou un autre récipient contenant un réactif de même type. Toutefois, cette pratique est à proscrire du fait qu'elle constitue une source d'erreur importante : elle compromet à la fois la qualité, la composition et la concentration du réactif.

Le document FR-A-1267855 décrit un bouchage pour flacon de réactif utilisable par un automate d'analyse comprenant une aiguille d'injection et/ou de prélèvement à bout droit ce flacon comprenant un corps tubulaire terminé, d'un côté, par un fond et, de l'autre côté, par un goulot obturable par un bouchon en matière élastique, ledit bouchon comportant un canal central coaxial servant pour le passage d'une aiguille d'injection et/ou de prélèvement, ce canal étant obturé par une bille présentant un diamètre légèrement supérieur à celui du canal.

L'invention a donc plus particulièrement pour but de réduire au strict minimum ce volume mort.

Elle propose à cet effet un bouchage selon la revendication 1.

Cette solution, qui convient particulièrement bien lorsque le fond du flacon présente une forme concave, offre de multiples avantages.

Ainsi, avant la reconstitution et/ou l'utilisation du réactif, le canal se trouve obturé à chacune de ses extrémités et ne peut donc pas contenir de matière pouvant ensuite altérer la qualité du réactif.

Par ailleurs, cette solution permet d'utiliser des aiguilles d'injection et'ou de prélèvement à extrémité plate (non taillée en biseau). Ainsi, lors de la reconstitution et/ou le prélèvement du réactif, l'aiguille passe au travers du canal en chassant les deux billes qui tombent dans le fond du flacon. L'aiguille poursuit sa descente pour enfin s'arrêter à faible distance du fond de la forme concave. A la fin de la descente, l'aiguille ne pourra pas être bloquée par l'une des billes : en effet, les deux billes, en reposant sur le fond concave, prennent appui l'une sur l'autre, et sont donc décentrées par rapport à l'axe de l'aiguille. Elles seront donc écartées lors du passage de cette dernière.

Tel ne serait pas le cas si l'on ne disposait que d'une seule bille.

Lors de la reconstitution, les billes pourront avantageusement jouer le rôle d'agitateur pour assurer la dilution du lyophilisât.

Un mode d'exécution de l'invention sera décrit ci-après, à titre d'exemple non limitatif, avec référence aux dessins annexés dans lesquels :
La figure 1 est une coupe axiale d'un flacon selon l'invention, équipé d'un bouchon et d'une capsule de bouchage ;
La figure 2 est une vue de dessus d'un opercule équipant la capsule de bouchage ;
La figure 3 est une coupe axiale d'un flacon lors de l'engagement d'une aiguille de prélèvement ;
La figure 4 est une vue de la partie inférieure du flacon montrant l'extrémité de l'aiguille engagée entre les deux billes provenant du bouchon.

Dans cet exemple, le flacon 1 présente un corps sensiblement cylindrique 2, terminé à l'une de ses extrémités par un goulot 3 muni de filets hélicoïdaux extérieurs 4 et, à son autre extrémité, par un fond 5 dont la paroi extérieure 6 est relativement plane.

Conformément à l'invention, la paroi intérieure 7 du fond présente une forme concave 8, ici sensiblement sphérique, coaxiale au corps 2.

Par ailleurs, le corps cylindrique 2 comprend une nervuration circulaire rentrante 9 qui s'étend parallèlement au fond 6, coaxialement et à faible distance de ce dernier.

Cette nervuration 9 sert notamment à retenir la galette de réactif lyophilisée 10 avant sa reconstitution, par exemple dans un automate d'analyse.

Dans cet exemple, le flacon 1 est obturé par un bouchon 11 réalisé en une matière résiliente telle que du caoutchouc ou en élastomère.

Ce bouchon 11 comprend une partie sensiblement cylindrique 12, de diamètre légèrement supérieur au goulot 3 et qui présente dans sa partie inférieure des cannelures axiales 13 servant d'évents pour laisser passer de la vapeur lors de la lyophilisation du réactif initialement liquide contenu dans le flacon 1. Il comporte à son extrémité supérieure un collet 14 de diamètre sensiblement égal au diamètre extérieur du goulot 3.

Ce bouchon 11 comporte en outre un passage central coaxial traversant 15, destiné à permettre le passage d'une aiguille d'injection et/ou de prélèvement 16 à bout plat (taillé perpendiculairement à son axe). En effet, l'usage d'une aiguille à extrémité biseautée, permettant le perçage du bouchon 11, ne conviendrait pas : contrairement au but recherché, elle engendrerait un volume mort de réactif sur presque toute la hauteur de la partie biseautée.

A l'intérieur du passage 15, sont engagées à force deux billes sphériques 17, 18 de diamètre légèrement supérieur à celui du passage 15.

Ces deux billes 17, 18, qui sont respectivement disposées à proximité des faces supérieures et inférieures du bouchon 11, assurent une double étanchéité au niveau de deux plans équatoriaux respectifs perpendiculaires à l'axe du passage 15. Grâce à cette disposition, on évite que le volume central du passage 15 ne puisse servir de réceptacle à du réactif ou à des substances étrangères susceptibles de dénaturer le réactif.

La fermeture du flacon 1 est en outre complétée grâce à une capsule de bouchage 20 qui présente une jupe cylindrique 21 dont la paroi intérieure est munie d'un taraudage 22 apte à venir se visser sur les filets 4 du goulot 3.

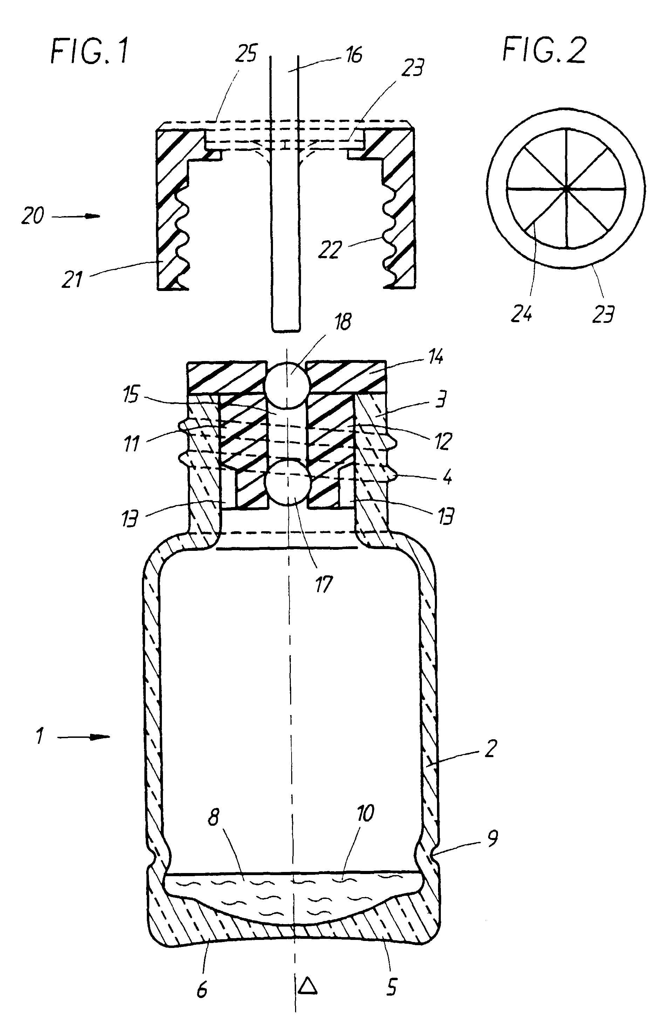

Cette capsule 20 est refermée, au niveau de son extrémité supérieure, par un opercule 23 surmoulé, réalisé en une matière élastique telle que du caoutchouc ou un élastomère. Comme on peut le voir sur la figure 2, cet opercule 23 présente la forme d'un disque muni d'une pluralité de fentes rayonnantes 24 se terminant chacune à une distance déterminée du bord circulaire du disque.

Comme cela sera expliqué ci-après, cet opercule 23 autorise le passage d'une aiguille d'injection et/ou de prélèvement et obture ensuite ce passage lors de l'extraction de l'aiguille en réduisant au minimum les phénomènes d'évaporation du réactif.

Dans le cas où le flacon 1 contient une galette 10 de lyophilisat, la première phase opératoire à exécuter est la reconstitution du réactif. A cet effet, une aiguille d'injection 16 est introduite dans le flacon 1 par le passage 15. Au cours de cette introduction, l'aiguille 16 qui traverse l'opercule 23 chasse progressivement les billes 17, 18 qui, en sortant du passage 15, tombent à l'intérieur du flacon 1 sur la galette 10 de lyophilisat (L'expulsion des billes pourrait être assurée préalablement à l'introduction de l'aiguille par tout moyen approprié).

L'automate effectue alors l'injection d'une quantité prédéterminée de solvant ou de diluant et réalise le mélange par agitation du flacon 1. Au cours de l'agitation, les billes 17, 18 exercent sur le lyophilisat une action mécanique analogue à celle d'un agitateur et contribuent à assurer une parfaite homogénéité du mélange.

Le prélèvement peut être ensuite assuré grâce à une aiguille de prélèvement 16' (éventuellement la même que celle de l'injection) dont l'extrémité inférieure est amenée à proximité du fond 5. Initialement, les billes 17, 18 se trouvent disposées l'une contre l'autre symétriquement par rapport à un plan de symétrie passant par l'axe A du flacon 1.

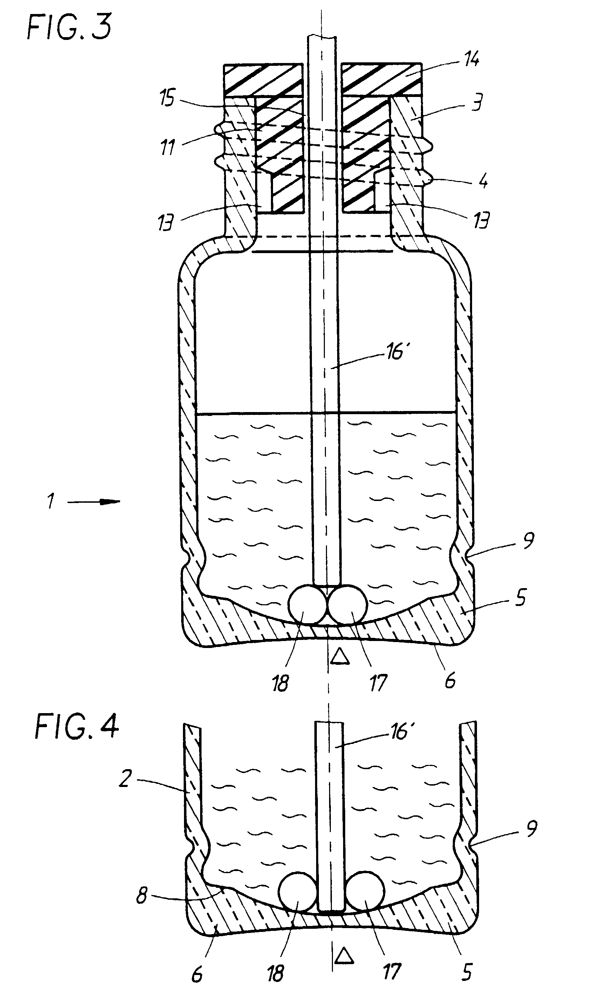

De ce fait, l'extrémité de l'aiguille 16', dont le diamètre est inférieur à la distance séparant le centre des deux billes 17, 18, va jouer le rôle d'un coin en s'interposant entre lesdites billes 17, 18 pour pouvoir arriver à proximité du fond (figure 4). On évite ainsi que l'extrémité de l'aiguille 16' vienne en butée sur une bille 17, 18 et ne puisse donc pas approcher le fond 5.

Après chaque phase de prélèvement, l'aiguille 16' peut être extraite du flacon 1. Dans ce cas, l'opercule 23, en reprenant sa position initiale, assure une obturation suffisante pour éviter l'évaporation du réactif à l'extérieur du flacon.

Bien entendu, l'invention ne se limite pas au mode d'exécution précédemment décrit.

Ainsi, le passage 15 pourrait être conformé de manière à assurer une meilleure mise en place des billes 17, 18. De même, un opercule de protection auto-adhésif 25 pourrait être disposé sur la face supérieure de la capsule de bouchage 20 ou même du bouchon 11.

## Revendications

1. Bouchage pour flacon de réactif (1) utilisable par un automate d'analyse comprenant une aiguille d'injection et/ou de prélèvement à bout droit (16, 16'), ce flacon (1) comprenant un corps tubulaire (2) terminé, d'un côté, par un fond (5) et, de l'autre côté, par un goulot (3) obturable par un bouchon en matière élastique (il), ledit bouchon (11) comportant un canal central coaxial (15) servant pour le passage d'une aiguille d'injection et/ou de prélèvement (16, 16'), ce canal (15) étant obturé par deux billes (17, 18) présentant un diamètre légèrement supérieur à celui du canal (15), et respectivement engagées au niveau de ses extrémités.

2. Bouchage selon la revendication 1,
caractérisé en ce que la paroi intérieure dudit fond (5) présente une forme concave ayant une profondeur qui s'accroît progressivement vers le centre du fond où elle atteint une valeur maximum.

3. Bouchage selon la revendication 2,
caractérisé en ce que ladite forme concave (8) est sensiblement sphérique.

4. Bouchage selon l'une des revendications 2 et 3,
caractérisé en ce que les deux billes (17, 18) présentent chacune un diamètre supérieur au diamètre extérieur de l'aiguille d'injection et/ou de prélèvement (16, 16').

5. Bouchage selon la revendication 4,
caractérisé en ce que l'aiguille (16, 16') présente un bout taillé perpendiculairement à son axe.

6. Bouchage selon l'une des revendications précédentes,
caractérisé en ce que le susdit bouchon (11) comprend une partie cylindrique (12) de diamètre supérieur au diamètre intérieur du goulot (3), cette partie cylindrique (12) présentant dans sa partie inférieure des cannelures axiales (13) servant d'évents.

7. Bouchage selon l'une des revendications précédentes,
caractérisé en ce qu'il comprend une capsule de bouchage (20) comportant une jupe circulaire (21) conformée de manière à pouvoir se visser sur des filets (4) prévus sur le goulot (3).

8. Bouchage selon la revendication 7,
caractérisé en ce que la capsule est refermée, au niveau de son extrémité supérieure, par un opercule (23) surmoulé, réalisé en matière élastique et présentant une pluralité de fentes rayonnantes (24) se rejoignant au centre et se terminant à une distance déterminée de son bord circulaire.

9. Bouchage selon l'une des revendications précédentes,
caractérisé en ce qu'un opercule de protection auto-adhésif (25) est disposé sur la face supérieure de la capsule (20) et/ou du bouchon (11).

## Patentansprüche

1. Verschluß für einen Reaktionskolben (1), der von einem Analyseautomaten mit einer Injektions- und/oder Entnahmenadel mit gerader Spitze (16, 16') verwendet werden kann, wobei dieser Kolben (1) einen rohrförmigen Körper (2) aufweist, der auf seiner einen Seite in einem Boden (5) und auf seiner anderen Seite in einem Hals (3) ausläuft, der durch einen Stopfen aus einem elastischen Material (11) verschließbar ist, wobei der Stopfen (11) einen koaxialen Mittelkanal (15) aufweist, der zum Durchführen einer Injektions- und/oder Entnahmenadel (16, 16') dient, wobei dieser Kanal (15) durch zwei Kugeln (17, 18) verschlossen ist, deren Durchmesser etwas größer als der des Kanals (15) ist und die jeweils an seinen Enden eingespannt sind.

2. Verschluß nach Anspruch 1, dadurch gekennzeichnet, daß die Innenwand des Bodens (5) eine konkave Form mit einer Tiefe aufweist, die zur Mitte des Bodens hin schrittweise zunimmt, wo sie einen maximalen Wert erreicht.

3. Verschluß nach Anspruch 2, dadurch gekennzeichnet, daß die konkave Form (8) im wesentlichen kugelförmig ist.

4. Verschluß nach einem der Ansprüche 2 und 3, dadurch gekennzeichnet, daß die beiden Kugeln (17, 18) jeweils einen Durchmesser aufweisen, der größer als der Außendurchmesser der Injektions- und/oder Entnahmenadel (16, 16') ist.

5. Verschluß nach Anspruch 4, dadurch gekennzeichnet, daß die Nadel (16, 16') eine senkrecht zu ihrer Achse zugespitzte Spitze aufweist.

6. Verschluß nach einem der vorhergehenden Ansprüche, dadurch gekennzeichnet, daß der Stopfen (11) einen zylindrischen Teil (12) mit einem Durchmesser aufweist, der größer als der Innendurchmesser des Halses (3) ist, wobei dieser zylindrische Teil (12) in seinem unteren Teil axiale Rillen (13) aufweist, die als Abzüge dienen.

7. Verschluß nach einem der vorhergehenden Ansprüche, dadurch gekennzeichnet, daß er eine Verschlußkapsel (20) mit einem kreisförmigen Mantel (21) aufweist, der so geformt ist, daß er auf Gewinde (4) aufgeschraubt werden kann, die am Hals (3) vorgesehen sind.

8. Verschluß nach Anspruch 7, dadurch gekennzeichnet, daß die Kapsel an ihrem oberen Ende wieder durch einen aufgeformten Deckel (23) wiederverschlossen ist, der aus einem elastischen Material besteht und eine Vielzahl radial verlaufender Schlitze (24) aufweist, die in der Mitte zusammenlaufen und in einem vorbestimmten Abstand von seinem kreisförmigen Rand enden.

9. Verschluß nach einem der vorhergehenden Ansprüche, dadurch gekennzeichnet, daß an der oberen Fläche der Kapsel (20) und/oder des Stopfens (11) ein selbstklebender Deckel (25) angerordenet ist.

## Claims

1. Seal for a reagent flask (1) usable by a blood analyser including an injection and/or straight end sampling needle (16, 16'), said flask (1) including a tubular body (2) ended on one side by a bottom (5) and on the other side by a neck (3) able to be sealed by a stopper made of an elastic material (11), said stopper (11) comprising a coaxial central channel (15) used for the passage of an injection and/or sampling needle (16, 16'), said channel (15) being sealed off by two balls (17, 18) having a diameter slightly larger than that of the channel (15), and respectively engaged at the level of their ends.

2. Seal according to claim 1,
characterised in that the internal wall of said bottom (5) has a concave shape whose depth gradually increases towards the center of the bottom where it reaches a maximum value.

3. Seal according to claim 2,
characterised in that said concave shape (8) is approximately spherical.

4. Seal according to claim 2 and 3,
characterised in that the two balls (17, 18) each have a diameter larger than the outer diameter of the injection and/or sampling needle (16, 16').

5. Seal according to claim 4,
characterised in that the needle (16, 16') has an end cut perpendicular to its axis.

6. Seal according to one of the preceding claims,
characterised in that said stopper (11) includes a cylindrical portion (12) having a diameter larger than the internal diameter of the neck (3), this cylindrical portion (12) having in its lower portion axial grooves (13) used as vents.

7. Seal according to one of the preceding claims,
characterised in that it includes a seal capsule (20) comprising a circular skirt (21) adjusted to be able to be screwed on threads (4) provided on the neck (3).

8. Seal according to claim 7,
characterised in that the capsule is reclosed at the level of its upper end by a compound-filled cap (23), made of an elastic material and having a plurality of radiant slots (24) meeting at the center and ending at a specific distance from its circular edge.

9. Seal according to one of the preceding claims,
characterised in that a self-adhesive protection cap (25) is placed on the upper face of the capsule (20) and/or the stopper (11).
